# EUROPÄISCHE PATENTANMELDUNG

(11) **EP 3 225 354 A1**
(43) Veröffentlichungstag der Anmeldung: **04.10.2017**
(21) Anmeldenummer: 17160030.7
(22) Anmeldetag: 09.03.2017
(51) Int. Cl.: B23Q 1/48, B23Q 5/34, B23Q 7/14

(54) **MANIPULATOR-EINHEIT SOWIE PALETTENWECHSELSYSTEM**

(30) Priorität: 01.04.2016 DE 202016101742 U
(71) Anmelder: Lasch, Thorsten, Dr.-Ing., 99880 Aspach (DE)
(72) Erfinder: Lasch, Thorsten, Dr.-Ing., 99880 Aspach (DE)
(74) Vertreter: Schober, Mirko

(57) **Zusammenfassung**

Eine Manipulator-Einheit umfasst eine zwei Aufnahmebereiche (8, 9) aufweisende Halteranordnung (7), welche derart beweglich gelagert ist, dass die Halteranordnung (7) um eine zwischen den Aufnahmebereichen (8, 9) gelegene Drehachse (z) herum rotierbar ist und in eine sich in einem Winkel zur Drehachse (z) erstreckende Verschieberichtung (x) linear verlagerbar ist. Zur Bewegung der Halteranordnung (7) ist eine durch einen Antrieb betätigbare sowie zwei Stellelemente (13, 14) aufweisende Synchronmechanik (12) vorgesehen. Die Synchronmechanik (12) ist dazu ausgebildet, die lineare Verlagerbarkeit sowie Rotierbarkeit der Halteranordnung (7) miteinander zu kombinieren.

## Beschreibung

Die Erfindung betrifft eine Manipulator-Einheit mit den Merkmalen von Anspruch 1 sowie ein Palettenwechselsystem mit wenigstens einer Manipulator-Einheit mit den Merkmalen von Anspruch 11.

Die Wirtschaftlichkeit in der Fertigung von Gütern sowie der Umgang mit diesen hängen maßgeblich von der Automatisierung der hierfür notwendigen Arbeitsabläufe ab. Die physikalische Interaktion mit der jeweiligen Umgebung erfolgt dabei durch den Einsatz standardisierter oder individuell ausgebildeter Manipulator-Einheiten bzw. Manipulatoren. Deren Beweglichkeit liegen mehrere bauliche Gelenkachsen zugrunde, welche eine entsprechende Anzahl einzeln ansteuerbarer Antriebe erfordert.

Neben dem Manipulieren und Positionieren von Bauteilen können Manipulator-Einheiten beispielsweise auch zum Führen eines Werkzeugs eingesetzt werden, um ein Werkstück in vorgegebener Weise zu bearbeiten. Des Weiteren werden Manipulator-Einheiten auch in Palettenwechselsystemen eingesetzt, wo sie beispielsweise dem Austausch von einem Bearbeitungszentrum zuzuführenden Werkzeugpaletten dienen.

Die an sich vorteilhaften hohen Bewegungsgeschwindigkeiten von Manipulator-Einheiten sind besonders zu Beginn und zum Ende eines Bewegungsablaufs zumeist unerwünscht. So kann deren abruptes Anfahren und/oder Abbremsen zu Stößen führen, in deren Folge beispielsweise ein erhöhter Verschleiß oder gar eine direkte Beschädigung eintreten kann. Insbesondere durch die jeweilige Manipulator-Einheit in ihrer Lage zu verändernde Anordnungen aus mehreren untereinander unverbundenen Bauteilen können hierdurch vollständig zerfallen oder zumindest teilweise durcheinander geraten. Um möglichst ruckfreie Bewegungen zu erhalten, ist daher ein entsprechend hoher Aufwand in der Ansteuerung der einzelnen Antriebe notwendig.

Vor diesem Hintergrund liegt der vorliegenden Erfindung die Aufgabe zugrunde, eine Manipulator-Einheit sowie ein Palettenwechselsystem mit wenigstens einer solchen Manipulator-Einheit dahingehend weiterzuentwickeln, dass ein ruckfreier Bewegungsablauf durch einen einzelnen Antrieb mit nur geringem Steueraufwand ermöglicht ist, um beispielsweise eine Werkzeugpalette über eine kombinierte Dreh- und Verlagerungsbewegung in eine Übergabeposition hineinzubewegen.

Die Lösung dieser Aufgabe besteht nach der Erfindung in einer Manipulator-Einheit mit den Merkmalen von Anspruch 1. Weiterhin wird diese Aufgabe mit einem Palettenwechselsystem mit den Merkmalen von Anspruch 11 gelöst. Vorteilhafte Ausführungsformen sind Gegenstand der jeweiligen Unteransprüche.

Erfindungsgemäß ist eine Manipulator-Einheit vorgesehen, welche beispielsweise zur Anordnung in einem Palettenwechselsystem vorgesehen sein kann. Die Manipulator-Einheit umfasst eine Halteranordnung, welche zwei Aufnahmebereiche aufweist. Zwischen den Aufnahmebereichen ist eine Drehachse gelegen. Die Halteranordnung ist derart beweglich gelagert, dass diese sowohl um die Drehachse herum rotierbar ist, als auch mitsamt der Drehachse entlang einer Verschieberichtung linear verlagert werden kann. Die Verschieberichtung erstreckt sich dabei in einem Winkel zur Drehachse. Bevorzugt beträgt der Winkel zwischen Verschieberichtung und Drehachse 90°. Selbstverständlich kann der Winkel auch in einem Bereich von 45° bis 135°, insbesondere in einem Bereich von 60° bis 120° liegen.

Um die Halteranordnung in der zuvor genannten Weise zu bewegen, ist eine mit der Halteranordnung verbundene Synchronmechanik vorgesehen. Die Synchronmechanik weist wenigstens zwei Stellelemente auf, wobei die Synchronmechanik durch einen Antrieb betätigbar ist. In ihrer Anordnung sowie Ausgestaltung ist die Synchronmechanik dazu ausgebildet, die lineare Verlagerbarkeit sowie Rotierbarkeit der Halteranordnung miteinander zu kombinieren. Mit anderen Worten werden die Bewegungsmöglichkeiten der Halteranordnung durch die Synchronmechanik derart miteinander gekoppelt, dass diese jeweils gleichzeitig erfolgen, so dass die Halteranordnung innerhalb eines so vorgegebenen Bewegungspfades beweglich ist.

Der sich hieraus ergebende Vorteil liegt insbesondere in der Synchronmechanik, welche trotz der Verwendung eines einzelnen Antriebs eine kombinierte Dreh- und Verlagerungsbewegung der Halteranordnung gestattet. Auf diese Weise ist ein überaus reduzierter Aufbau der Manipulator-Einheit ermöglicht, welche mit einem auf ein Minimum reduzierten Steueraufwand betrieben werden kann. Dank der mechanischen Kopplung der Bewegungsmöglichkeiten der Halteranordnung über die Synchronmechanik können so insbesondere deren Aufnahmebereiche über eine kombinierte Dreh- und Verlagerungsbewegung der Halteranordnung abwechselnd voneinander in eine Übergabeposition hineinbewegt werden.

Insbesondere die untrennbare Kopplung der Rotations- und Verlagerungsbewegung ermöglicht einen ruckfreien Bewegungsablauf der Halteranordnung. Dem liegt die Tatsache zugrunde, dass die Aufnahmebereiche der insofern zwangsgeführten Halteranordnung quasi sinusförmig beschleunigt und abgebremst werden, indem sie abwechselnd voneinander in die jeweilige Übergabeposition hinein beweglich sind.

Gemäß einer bevorzugten Weiterbildung des grundsätzlichen Erfindungsgedankens kann ein erstes Stellelement der Synchronmechanik in vorteilhafter Weise an einem stationären Drehlager abgestützt sein. Das somit in seiner Lage unbewegliche Drehlager dient dabei als Fixpunkt, mit dem die bewegliche Halteranordnung über die Synchronmechanik verbunden ist.

Die Erfindung sieht insbesondere vor, dass ein zweites Stellelement der Synchronmechanik in besonders bevorzugter Weise verdrehfest mit der Halteranordnung verbunden sein kann. Hierdurch wird eine potentielle Verdrehung der Halteranordnung gleichzeitig auf das zweite Stellelement der Synchronmechanik übertragen.

Nach einer vorteilhaften Weiterentwicklung der erfindungsgemäßen Manipulator-Einheit kann vorgesehen sein, dass das zweite Stellelement der Synchronmechanik zumindest teilweise um die Drehachse der Halteranordnung herum rotierbar ist. Sofern ein der Halteranordnung gegenüberliegender Abschnitt des zweiten Stellelements in einer Ebene fixiert wird, kann so aus einer Rotation des zweiten Stellelements gleichzeitig eine Verlagerung der Halteranordnung entlang der Verschieberichtung folgen. Dem liegt die Tatsache zugrunde, dass die das zweite Stellelement dabei haltende Ebene bei dessen Rotation in ihrem Abstand zur Drehachse der Halteranordnung relativ verändert wird.

Im Rahmen der Erfindung wird es als besonders vorteilhaft angesehen, wenn das erste Stellelement zumindest teilweise um das stationäre Drehlager herum rotierbar angeordnet ist. In besonders bevorzugter Weise können die Stellelemente der Synchronmechanik durch ein Gelenk unmittelbar miteinander gekoppelt sein. Selbstverständlich ist auch eine indirekte Kopplung der beiden Stellelemente untereinander denkbar, beispielsweise über einen Waagebalken. Der Vorteil der gelenkigen Kopplung beider Stellelemente der Synchronmechanik untereinander liegt in der so möglichen Verbindung des stationären Drehlagers mit der Halteranordnung.

Gemäß einer vorteilhaften Weiterbildung kann eine sich parallel zur Verschieberichtung erstreckende Führung vorgesehen sein, wobei die Halteranordnung dann entlang der Führung in Verschieberichtung linear geführt ist. Die Führung ermöglicht eine grundsätzlich gleichgerichtete Verlagerung der Halteranordnung, was einen überaus präzisen Bewegungsablauf mit geringstmöglichen Toleranzen ermöglicht.

Eine besonders bevorzugte Weiterentwicklung der erfindungsgemäßen Manipulator-Einheit sieht vor, dass ein Abstand zwischen dem stationären Drehlager und der demgegenüber in Verschieberichtung linear verlagerbaren Drehachse der Halteranordnung unter Veränderung eines zwischen den beiden Stellelementen eingeschlossenen Winkels veränderbar ist. Somit bilden die Stellelemente der Synchronmechanik quasi eine Hälfte eines Scherengetriebes, dessen maximale Erstreckung durch Abwinkeln der Stellelemente gegeneinander entsprechend verringerbar ist.

Hinsichtlich der Anordnung des Antriebes ist es nun möglich, diesen beispielsweise in Form eines Linearantriebs mit dem die Stellelemente miteinander koppelnden Gelenk zu verbinden. Durch eine lineare Verlagerung des Gelenks werden dann beide Stellelemente gleichzeitig unter Verkleinerung des zwischen ihnen eingeschlossenen Winkels in voneinander abweichender Drehrichtung gegeneinander verschwenkt. Hierdurch wird der Abstand zwischen dem mit dem ersten Stellelement verbundenen stationären Drehlager und der demgegenüber in Verschieberichtung linear verlagerbaren Drehachse der mit dem zweiten Stellelement verbundenen Halteranordnung verändert. Gleichzeitig erfolgt eine Übertragung der Rotation des zweiten Stellelements auf die mit ihm verdrehfest verbundene Halteranordnung, so dass diese eine kombinierte Dreh- und Verlagerungsbewegung vollzieht.

In besonders bevorzugter Weise kann der Antrieb als Drehantrieb ausgebildet sein. Dabei kann der Antrieb derart mit der Halteranordnung verbunden sein, dass dessen um die Drehachse herum erzeugbares Drehmoment auf die Halteranordnung und das zweite Stellelement übertragbar ist. Durch seine Anordnung im Bereich der Halteranordnung ist der Antrieb somit zusammen mit der Halteranordnung in Verschieberichtung linear verlagerbar.

Selbstverständlich ist alternativ denkbar, den Antrieb in Form eines Drehantriebs direkt an dem zwischen den Stellelementen gelegenen Gelenk anzuordnen. Weiterhin alternativ hierzu kann der Anrieb in Form eines Drehantriebs auch an dem stationären Drehlager angeordnet sein.

In vorteilhafter Weise kann ein Kulissenstein vorgesehen sein, welcher entlang der Führung in Verschieberichtung linear verlagerbar ist. Bevorzugt kann der Antrieb dabei so mit dem Kulissenstein verbunden und/oder an diesem gelagert sein, dass der Antrieb während seiner linearen Verschiebung über den Kulissenstein entlang der Führung abgestützt ist.

Die nunmehr vorgestellte erfindungsgemäße Manipulator-Einheit gestattet deren überaus wirtschaftlichen Aufbau sowie Betrieb. Deren erfindungsgemäße Ausgestaltung ermöglicht einen ruckfreien Bewegungsablauf, welcher mit einem einzelnen Antrieb und entsprechend geringem Steueraufwand realisierbar ist.

Die Erfindung ist ferner auf ein Palettenwechselsystem gerichtet, welches mit wenigstens einer wie zuvor aufgezeigten erfindungsgemäßen Manipulator-Einheit ausgestattet ist. Dabei sind die Aufnahmebereiche der Halteranordnung der Manipulator-Einheit derart ausgestaltet, dass in oder an diesen jeweils eine Werkzeugpalette aufnehmbar ist.

Die sich hieraus ergebenden Vorteile wurden bereits zuvor im Zusammenhang mit der Vorstellung der erfindungsgemäßen Manipulator-Einheit näher erläutert, so dass an dieser Stelle auf die vorherigen Ausführungen hierzu verwiesen wird.

Weitere Ausgestaltungen der erfindungsgemäßen Manipulator-Einheit und/oder des erfindungsgemäßen Palettenwechselsystem können sich durch eine technisch sinnvolle Kombination einzelner oder mehrerer in der vorliegenden Beschreibung der Erfindung aufgezeigter Merkmale ergeben und werden ausdrücklich im Rahmen der Erfindung mit beansprucht. Weitere Charakterisierungen und Spezifizierungen der Erfindung können sich auch im Zusammenhang mit den nachfolgend beschriebenen Figuren ergeben, welche ebenfalls als Teil der Erfindung angesehen und mit beansprucht werden.

Die Erfindung wird im Folgenden anhand des in den Figuren schematisch dargestellten Ausführungsbeispiels näher erläutert. Es zeigen:
- Figur 1 -: ein erfindungsgemäßes Palettenwechselsystem in einer Draufsicht,
- Figur 2 -: das Palettenwechselsystem aus Fig. 1 in einer Übergabeposition,
- Figur 3 -: das Palettenwechselsystem aus Fig. 1 als Zwischenschritt einer teilweise veränderten Ausrichtung zwischen den Fig. 2 und 4,
- Figur 4 -: das Palettenwechselsystem aus den Fig. 1 bis 3 in einer gegenüber Fig. 3 weiter teilweise veränderten Ausrichtung sowie
- Figur 5 -: das Palettenwechselsystem aus den Fig. 1 bis 4 in einer gegenüber Fig. 4 nochmals weiter veränderten Ausrichtung.

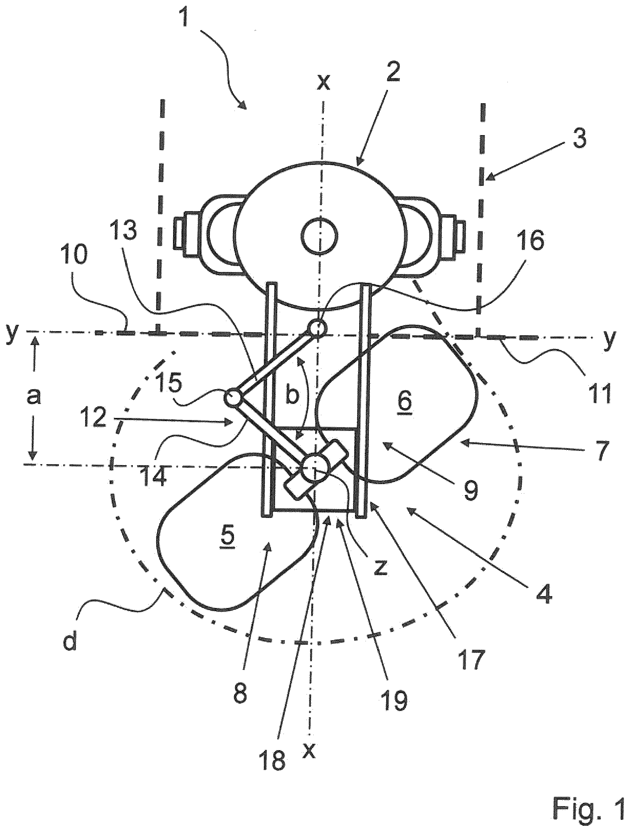

Figur 1 zeigt ein erfindungsgemäßes Palettenwechselsystem 1 in einer Draufsicht. Das Palettenwechselsystem 1 ist vorliegend im Zusammenhang mit einem Bearbeitungszentrum 2 dargestellt, welches in einer zumindest dreiseitig angedeuteten Umhausung 3 angeordnet ist.

Das Palettenwechselsystem 1 umfasst eine Manipulator-Einheit 4, welche dem Wechsel von zwei schematisch angedeuteten Paletten 5, 6, insbesondere Werkzeugpaletten, für das Bearbeitungszentrum 2 dient.

Ersichtlich umfasst die Manipulator-Einheit 4 eine bewegliche Halteranordnung 7, welche zwei jeweils endseitig angeordnete Aufnahmebereiche 8, 9 zur zumindest temporären Aufnahme der Paletten 5, 6 aufweist. Die Halteranordnung 7 ist in einer - vorliegend auf die Mitte des Bearbeitungszentrums 2 hin ausgerichteten - Verschieberichtung x linear verlagerbar. Die Umhausung 3 weist zwei sich in eine Querrichtung y erstreckende Türelemente 10, 11 auf, durch deren gegenläufige Verlagerung in Querrichtung y die Umhausung 3 öffenbar ist. Weiterhin ist eine zwischen den beiden Aufnahmebereichen 8, 9 gelegene und sich in eine Hochrichtung erstreckende Drehachse z vorgesehen, um welche herum die Halteranordnung 7 rotierbar ist. Die Verschieberichtung x erstreckt sich dabei in einem Winkel zur Drehachse z, welcher vorliegend 90° beträgt.

Um die Halteranordnung 7 bewegen zu können, ist ferner eine Synchronmechanik 12 vorgesehen, welche zwei Stellelemente 13, 14 besitzt. Erkennbar sind die beiden Stellelemente 13, 14 durch ein Gelenk 15 gelenkig miteinander gekoppelt. Ein erstes Stellelement 13 der Synchronmechanik 12 ist an einem stationären Drehlager 16 abgestützt, während ein zweites Stellelement 14 der Synchronmechanik 12 verdrehfest mit der Halteranordnung 7 verbunden ist. Die Stellelemente 13, 14 sind vorliegend stabförmig ausgebildet.

In ihrer Anordnung sind das zweite Stellelement 14 zumindest teilweise um die Drehachse z der Halteranordnung 7 herum rotierbar und das erste Stellelement 13 zumindest teilweise um das stationäre Drehlager 16 herum rotierbar.

Wie zu erkennen, weist die Manipulator-Einheit 4 ferner eine Führung 17 auf, entlang der die Halteranordnung 7 in Verschieberichtung x linear geführt ist. Hierzu ist ein Kulissenstein 18 vorgesehen, welcher einen nicht näher dargestellten Antrieb 19 zur Betätigung der Synchronmechanik 12 umfasst. Über den Kulissenstein 18 ist der Antrieb 19 entlang der Führung 17 abgestützt. Der Antrieb 19 ist vorliegend als Drehantrieb ausgebildet, dessen Drehmoment um die Drehachse z herum auf die Halteranordnung 7 und das zweite Stellelement 14 übertragbar ist. Dabei ist der Antrieb 19 zusammen mit der Halteranordnung 7 in Verschieberichtung x linear verlagerbar.

Aufgrund der Ausgestaltung der Synchronmechanik 12 ist ein Abstand a zwischen dem stationären Drehlager 16 und der demgegenüber in Verschieberichtung x linear verlagerbaren Drehachse z der Halteranordnung 7 unter Veränderung eines zwischen den beiden Stellelementen 13, 14 eingeschlossenen Winkels b veränderbar. So ist die Synchronmechanik 12 dazu ausgebildet, die lineare Verlagerbarkeit sowie Rotierbarkeit der Halteranordnung 7 miteinander zu kombinieren. Auf diese Weise sind die beiden Aufnahmebereiche 8, 9 über eine kombinierte Dreh- und Verlagerungsbewegung der Halteranordnung 7 abwechselnd voneinander in eine hier nicht dargestellte Übergabeposition C hinein beweglich, in der die jeweilige Palette 5, 6 an das Bearbeitungszentrum 2 übergeben werden kann. Dabei folgen die beiden Aufnahmebereiche 8, 9 der Halteranordnung 7 einem Bewegungspfad d, welcher eine quasi sinusförmige Beschleunigung sowie Verzögerung der Bewegung der Halteranordnung 7 gestattet.

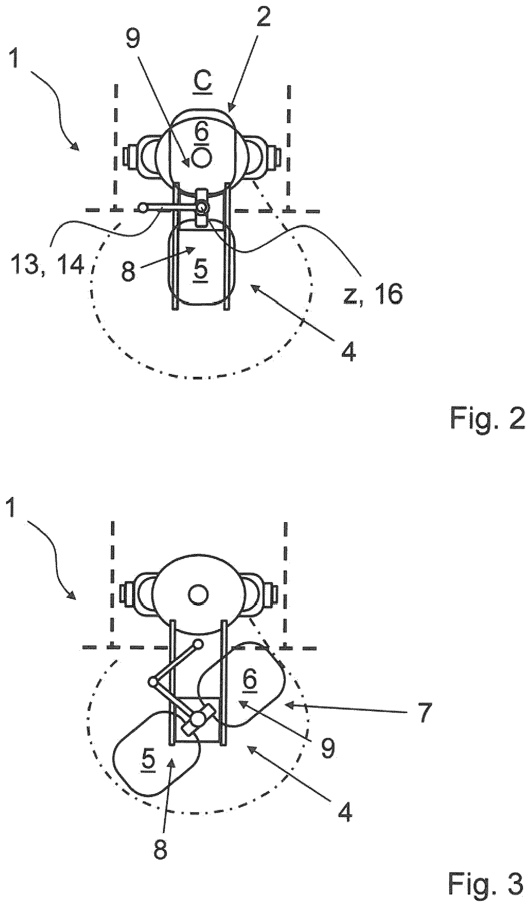

Die Figuren 2 bis 5 zeigen die Halteranordnung 7 in unterschiedlichen Positionen, denen nacheinander eine Drehung des Antriebs 19 um 180° im Uhrzeigersinn zugrunde liegt.

Figur 2 zeigt die Manipulator-Einheit 4 des Palettenwechselsystems 1 aus Figur 1 in der zuvor bereits erwähnten Übergabeposition C. Erkennbar sind die Stellelemente 13, 14 dabei parallel zur Querrichtung y ausgerichtet, so dass die Drehachse z und das stationäre Drehlager 16 übereinander angeordnet sind. In der hier gezeigten Übergabeposition C ist der Aufnahmebereich 9 mit der Palette 6 erkennbar vollständig innerhalb des Bearbeitungszentrums 2 angeordnet.

Figur 3 entspricht der Darstellung der Manipulator-Einheit 4 des Palettenwechselsystems 1 aus Figur 1. Hierbei ist der Aufnahmebereich 9 mit der Palette 6 bereits außerhalb des Bearbeitungszentrums 2 angeordnet. Dieser Ausrichtung der Halteanordnung 7 liegt eine Drehung des Antriebs 19 um 45° im Uhrzeigersinn gegenüber der Darstellung in Figur 2 zugrunde.

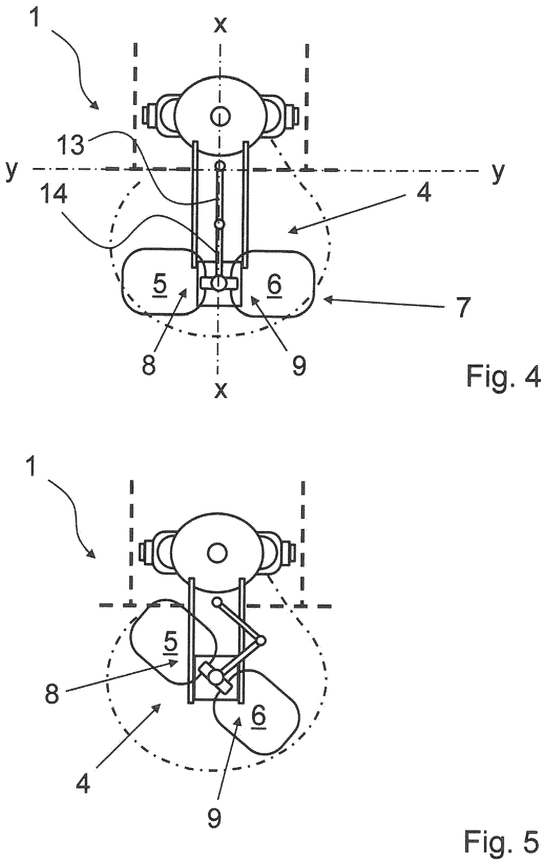

Figur 4 zeigt die Halteanordnung 7 in einer Ausrichtung parallel zur Querrichtung y, wobei die Stellelemente 13, 14 parallel zur Verschieberichtung x ausgerichtet sind. Dieser Ausrichtung der Halteanordnung 7 liegt eine Drehung des Antriebs 19 um 90° im Uhrzeigersinn gegenüber der Darstellung in Figur 2 zugrunde.

Figur 5 zeigt eine weitere Verlagerung der Halteranordnung 7, welche nunmehr die Anordnung des Aufnahmebereichs 8 mit der Palette 5 innerhalb des Bearbeitungszentrums 2 vorbereitet. Mit Bezug auf die Darstellung in Figur 1 sowie Figur 3 weisen hierbei die beiden Stellelemente 13, 14 erkennbar zu einer gegenüberliegenden Seite. Dieser Ausrichtung der Halteanordnung 7 liegt eine Drehung des Antriebs 19 um 135° im Uhrzeigersinn gegenüber der Darstellung in Figur 2 zugrunde.

## Patentansprüche

1. Manipulator-Einheit, umfassend eine zwei Aufnahmebereiche (8, 9) aufweisende Halteranordnung (7), welche derart beweglich gelagert ist, dass die Halteranordnung (7) um eine zwischen den Aufnahmebereichen (8, 9) gelegene Drehachse (z) herum rotierbar ist sowie in eine sich in einem Winkel zur Drehachse (z) erstreckende Verschieberichtung (x) linear verlagerbar ist, wobei zur Bewegung der Halteranordnung (7) eine durch einen Antrieb betätigbare sowie zwei Stellelemente (13, 14) aufweisende Synchronmechanik (12) vorgesehen ist, welche dazu ausgebildet ist, die lineare Verlagerbarkeit sowie Rotierbarkeit der Halteranordnung (7) miteinander zu kombinieren.

2. Manipulator-Einheit nach Anspruch 1,
**dadurch gekennzeichnet,**
**dass** ein erstes Stellelement (13) der Synchronmechanik (12) an einem stationären Drehlager (16) abgestützt ist.

3. Manipulator-Einheit nach Anspruch 1 oder 2,
**dadurch gekennzeichnet,**
**dass** ein zweites Stellelement (14) der Synchronmechanik (12) verdrehfest mit der Halteranordnung (7) verbunden ist.

4. Manipulator-Einheit nach einem der Ansprüche 1 bis 3,
**dadurch gekennzeichnet,**
**dass** das zweite Stellelement (14) zumindest teilweise um die Drehachse (z) der Halteranordnung (7) herum rotierbar ist.

5. Manipulator-Einheit nach einem der Ansprüche 2 bis 4,
**dadurch gekennzeichnet,**
**dass** das erste Stellelement (13) zumindest teilweise um das stationäre Drehlager (16) herum rotierbar ist.

6. Manipulator-Einheit nach einem der Ansprüche 1 bis 5,
**dadurch gekennzeichnet,**
**dass** die Stellelemente (13, 14) durch ein Gelenk (15) gelenkig miteinander gekoppelt sind.

7. Manipulator-Einheit nach einem der Ansprüche 1 bis 6,
**dadurch gekennzeichnet,**
**dass** die Halteranordnung (7) entlang der Verschieberichtung (x) an einer Führung (17) linear geführt ist.

8. Manipulator-Einheit nach einem der Ansprüche 2 bis 7,
**dadurch gekennzeichnet,**
**dass** ein Abstand (a) zwischen dem stationären Drehlager (16) und der demgegenüber in Verschieberichtung (x) linear verlagerbaren Drehachse (z) der Halteranordnung (7) unter Veränderung eines zwischen den beiden Stellelementen (13, 14) eingeschlossenen Winkels (b) veränderbar ist.

9. Manipulator-Einheit nach einem der Ansprüche 1 bis 8,
**dadurch gekennzeichnet,**
**dass** der Antrieb (19) als Drehantrieb ausgebildet ist, dessen Drehmoment um die Drehachse (z) herum auf die Halteranordnung (7) und das zweite Stellelement (14) übertragbar ist, wobei der Antrieb (19) zusammen mit der Halteranordnung (7) in Verschieberichtung (x) linear verlagerbar ist.

10. Manipulator-Einheit nach einem der Ansprüche 7 bis 9,
**dadurch gekennzeichnet,**
**dass** der Antrieb (19) über einen Kulissenstein (18) entlang der Führung (17) abgestützt ist.

11. Palettenwechselsystem, umfassend wenigstens eine Manipulator-Einheit (4) nach einem der Ansprüche 1 bis 10, in deren zwei Aufnahmebereichen (8, 9) ihrer Halteranordnung (7) jeweils wenigstens eine Palette (5, 6), insbesondere Werkzeugpalette, aufnehmbar ist.
